(19) Europäisches Patentamt

European Patent Office

Office européen des brevets

(11) EP 0 505 142 B1

(12) **EUROPEAN PATENT SPECIFICATION**

(45) Date of publication and mention
of the grant of the patent:
**23.10.1996 Bulletin 1996/43**

(51) Int Cl.6: **G06T 15/00**

(21) Application number: **92302279.2**

(22) Date of filing: **17.03.1992**

(54) **A method and apparatus for rendering a three-dimensional object on a two-dimensional display**

Verfahren und Einrichtung zur Darstellung eines dreidimensionalen Objektes auf einer zweidimensionalen Anzeige

Procédé et dispositif pour représenter une image à trois dimensions sur un affichage à deux dimensions

(84) Designated Contracting States:
**DE FR GB IT**

(30) Priority: **18.03.1991 JP 77312/91**

(43) Date of publication of application:
**23.09.1992 Bulletin 1992/39**

(73) Proprietor: **International Business Machines
Corporation
Armonk, N.Y. 10504 (US)**

(72) Inventor: **Koide, Akio
Kawasaki-shi, Kanagawa-ken (JP)**

(74) Representative: **Burt, Roger James, Dr.
IBM United Kingdom Limited
Intellectual Property Department
Hursley Park
Winchester Hampshire SO21 2JN (GB)**

(56) References cited:
**DE-A- 2 933 573**

- **SCIENCE, vol.222, 1983, LANCASTER, PA US pages 1325 - 1327 BASH ET AL 'Van der Waals Surfaces in Molecular Modeling'**
- **IEEE COMPUTER GRAPHICS AND APPLICATIONS, vol.8, no.4, July 1988, NEW YORK US pages 42 - 50 MAX ET AL 'Spherical Harmonic Molecular Surfaces'**
- **IBM TECHNICAL DISCLOSURE BULLETIN., vol.33, no.10A, March 1991, NEW YORK US pages 92 - 93 'Visualization of molecular structures under the graPHIGS API V2 environment at IBM 6090 and risc system/6000 workstations'**

EP 0 505 142 B1

## Description

The present invention relates to method and apparatus for rendering a three-dimensional object on a two-dimensional display of a computer, and more particularly to a method and apparatus for rendering a three-dimensional object, the object being a body of rotation such as a sphere, by a plurality of dots on a two-dimensional display in a computer graphics system.

It has recently become popular to use various three-dimensional objects rendered on a two-dimensional display screen with a computer graphics system in research or technical applications. One such application is molecular modelling or molecular simulation which is used to research the characteristics of a substance by rendering a three-dimensional molecular model on a screen. In molecular modelling, spherical and curved surfaces can be three-dimensionally rendered by a plurality of dots.

The method of rendering a three-dimensional object by a plurality of dots is simple compared with the so-called solid model method in which spherical and curved surfaces are smeared while maintaining the three-dimensional effect. Therefore, such rendering has the advantage that it can be executed at a high speed without requiring a great deal of computer processing time.

Throughout this specification, a point may also be referred to as a dot or marker. They have a limited size and are small when compared with the entire size of a rendered three-dimensional object whose shape may consist of lines, circles, crosses, or any other shape. They may be displayed on the screen as luminescent points, black points, or in any other colour.

A technique for depicting the spherical surfaces of a molecular model by a plurality of dots is described by Bash, P.A. et al in "van der waals Surfaces in Molecular Modelling, Implementation with Real Time Computer Graphics," Science, vol. 222, pp. 1325-1327, 1983.

The article "Spherical Harmonic Molecular Surfaces" by Max et al, IEEE Computer Graphics and applications, vol.8, No.4, 1988, pp. 42-50, describes a technique which approximates the solvent-accessible surface of a molecule to a sequence of smooth surfaces. These surfaces are then rendered with a collection of dots, or are divided into triangles and smoothly shaded.

Conventional methods for three-dimensionally depicting spherical surfaces using a plurality of dots include the flat-to-spherical-surface equal-area mapping method (for details, see "Guide to Molecular Simulation" written by A. Koide, edited by Okada and Osawa, and published by Kaibundo, pp. 209-210, 1989), the latitude-longitude intersection method ("Molecular Design Support System," program No. 5788- JKF/JKG/JKH/JKJ/JKL/,IKN, developed by Japan IBM is one of the graphics and program products using this method), and the point symmetry group method.

In the conventional equal-area mapping method, observation of a three-dimensional model from a different angle while continuously (in real time) rotating the model is not preferable because the domain where dots around the outer periphery of the spherical surface are concentrated before the model is rotated appear as a stripe similar to the equator. In the conventional latitude-longitude intersection method, it is occasionally difficult to observe the model because dots tend to concentrate at the north and south poles and disperse around the equator. In the conventional point symmetry group method, more dots are generally required for rendering, more computer processing time is required for calculation of coordinate conversion of dots to rotate the molecular model, and dots after rotation are unnaturally arranged.

It is accordingly an object of the present invention to provide a method of and an apparatus for rendering a three-dimensional object, the object being a body of rotation, on a two-dimensional display screen by a plurality of dots in a computer graphics system so that calculation is simple, dots are uniformly distributed on the surfaces forming the object and not unnaturally arranged on the surfaces, the direction of a three- dimensional model can easily be obtained after it is rotated, and distribution of the dots on the surfaces is not unnatural.

Accordingly, the present invention provides a method of rendering a three-dimensional object by a plurality of dots on a two-dimensional display, the three-dimensional object being a body of rotation, and the method being characterised by the steps of: dividing the surfaces forming the body into a first domain and a second domain, the first domain including those surfaces for which the rate of change of the radius of gyration measured from a notional axis of rotation of the body is larger than the rate of change of the radius of gyration of surfaces in the second domain; arranging dots whose number increases in accordance with the increase of said radius of gyration on concentric circumferences in said first domain at an equal interval; and arranging a certain number of dots on concentric circumferences at an equal interval in said second domain so that a dot on a concentric circumference is located between the dots on the adjacent concentric circumferences.

Viewed from a second aspect the present invention provides an apparatus for rendering a three-dimensional object by a plurality of dots on a two-dimensional display, the three-dimensional object being a body of rotation and the apparatus being characterised by: a diving means for dividing the surfaces forming the body into a first domain and a second domain, the first domain including those surfaces for which the ra e of change of the radius of gyration measured from a notional axis of rotation of the body is larger than the rate of change of the radius of gyration of surfaces in said second domain; and an arranging means for arranging dots whose number increases in accordance with the increase in said radius of gyration on concentric circumferences in said first domain at an equal interval, and for arranging a certain number of dots on concentric circumferences at an equal interval in said second domain so that a dot on a concentric circumference is located between the dots on the adjacent concentric circumferences.

To render a body of rotation by dots in the preferred embodiment of the present invention, the surfaces forming the body are divided into a first domain with a relatively large change in the radius of gyration from the rotation axis and a second domain with a relatively small change in the radius of gyration from the rotation axis (e.g. polar domains and equatorial domain for a sphere) and dots are arranged in each domain according to different rules. The dots whose number increases in accordance with the increase in the radius of gyration are arranged on concentric circumferences at an equal interval in the first domain and a certain number of dots are arranged on concentric circumferences at an equal interval in the second domain so that a dot on a concentric circumference is located between the dots on the adjacent concentric circumference. In the above-mentioned sphere, the dots whose number increases (e.g. in an arithmetic progression) in the direction from the poles to the equator are arranged on parallel lines of latitude at an equal interval in the polar domains and a certain number of dots are arranged on parallel lines of latitude at an equal interval in the equatorial domain so that a dot on a parallel line of latitude is located between the dots on the adjacent parallel lines of latitude. It is permitted for the above arithmetic progression to have a first term of "1" (one point at the pole) and a common difference of "5" or "6".

The present invention will be described further, by way of example only, with reference to an embodiment thereof as illustrated in the accompanying drawings, in which:

Figure 1 shows a block diagram of a computer graphics system in accordance with the preferred embodiment of the present invention;

Figure 2 shows how to divide spherical surfaces according to the method of the preferred embodiment;

Figure 3 shows a sphere viewed from its north pole in a direction perpendicular to the equatorial surface as rendered by the method of the preferred embodiment;

Figure 4 shows a sphere viewed from a direction parallel with the equatorial surface of the sphere in Figure 3;

Figure 5 shows a drawing obtained by rotating the sphere in Figure 3;

Figure 6 shows a drawing obtained by further rotating the sphere in Figure 3;

Figure 7 shows a molecular model formed by combining a plurality of spheres rendered according to the preferred embodiment;

Figure 8 illustrates the method of dividing the surfaces forming the body of rotation into a plurality of domains and rendering the body by a plurality of dots in order to describe how to three-dimensionally render the body of rotation according to a second embodiment of the method of the present invention; and

Figure 9 shows the rotated body of rotation in Figure 8.

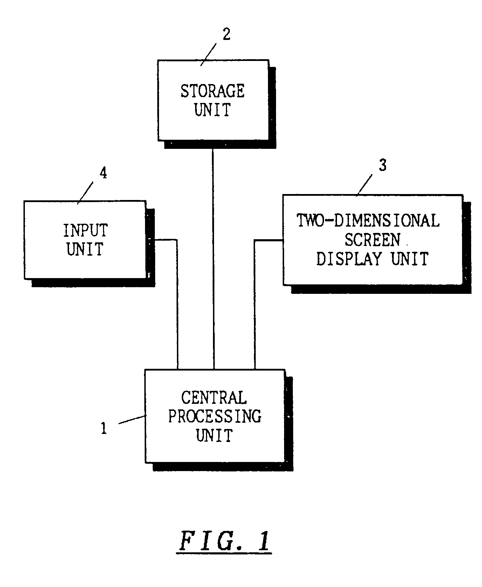

Figure 1 illustrates a system used in a preferred embodiment of the present invention and particularly the essential section of the computer graphics system used to execute the method of the preferred embodiment. The system may be an IBM RISC System/6000 or other computer graphics system. In Figure 1, numeral 1 is a central processing unit used to execute arithmetic operations and control. Numeral 2 is a storage unit used to store the computer program and data needed to execute the preferred embodiment. Numeral 3 is two-dimensional screen display unit such as a CRT capable of displaying all display graphic points. Numeral 4 is an input unit such as a keyboard or mouse available for the operator to input data to the unit.

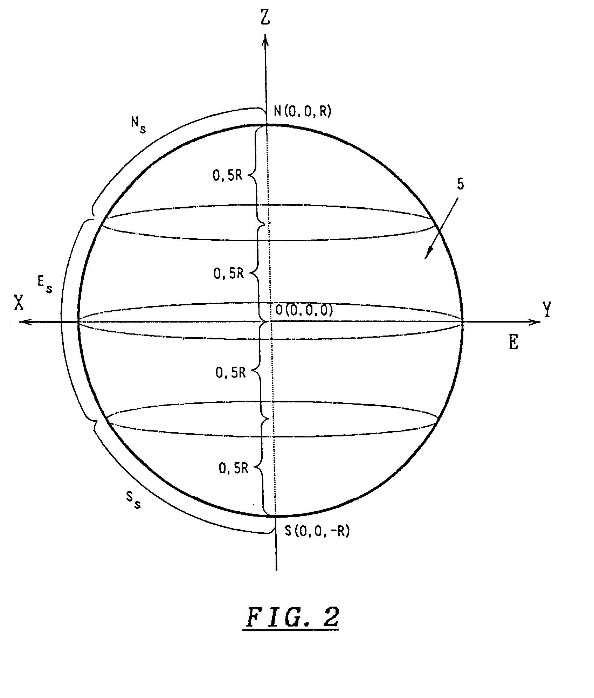

The method of the preferred embodiment enables a three-dimensional object, e.g., a sphere with radius R shown in Figure 2, to be rendered using a plurality of dots. The coordinates of the centre 0 of the sphere are shown as (0, 0, 0), those of the north pole N as (0, 0, R), and those of the south pole S as (0,0,-R). The spherical surface 5 composing the sphere is divided by setting the portion of the spherical surface located within the range of "0.5R" in the direction (Z direction) perpendicular to the equatorial surface (X-Y surface) of the sphere as the equatorial domain Es, that portion located on the north-pole N side of the equatorial domain Es as the north-pole domain Ns, and that portion located on the south-pole S side of the equatorial domain Es as the south-pole domain Ss. In the north-pole domain Ns and south-pole domain Ss, the rate of change of the radius of gyration (distance from the rotation axis Z) of the sphere with Z is larger than that of the radius of gyration of the sphere in the equatorial domain Es.

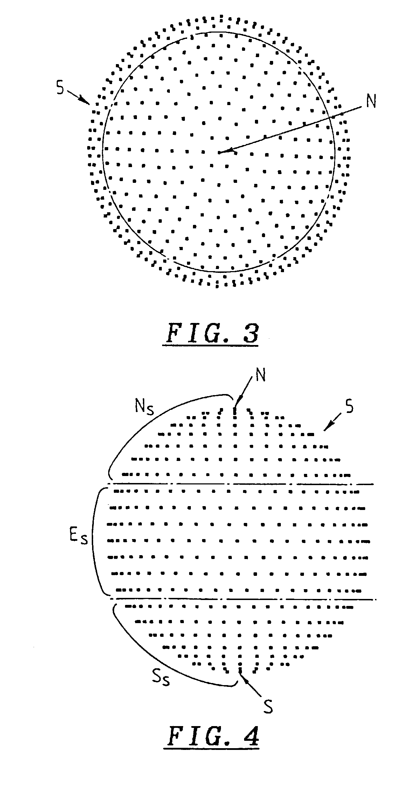

The method of the preferred embodiment renders a sphere by arranging a plurality of dots according to different rules in the polar domains Ns and Ss and the equatorial domain Es. The rules for arrangement of the dots for a sphere will be described with reference to Figures 3 and 4.

Firstly, the method used to generate dots for rendering the north-pole domain Ns will be described. One dot is put on the north-pole N (0, 0, R). Then, 6*j dots are arranged at equal intervals on parallel lines of latitude on the spherical surface of the sphere 1 having a height of Zj from the equatorial surface E. In the preferred embodiment, this case, Zj is expressed as follows:

$$Zj = R (1 - j^2/M(N + M))$$

Where, $j = 1, 2, ..., N - 1$, N is an integer.

Arrangement of the 6*j dots on the parallel lines of latitude with a height of Zj at equal intervals is obtained as follows:

Assuming $6j = K$ and $n = 0, 1, 2, ..., K - 1$, and referring to the X and Y coordinates of the dots on the parallel lines of latitude as Xn and Yn, Xn and Yn are obtained from the following expressions.

$$Xn = sqrt (R^2 - Zj^2) \cos (2n\pi/K)$$

$$Yn = sqrt (R^2 - Zj^2) \sin (2n\pi/K)$$

The dots for rendering the south-pole domain Ss are generated by generating dots at coordinates (X, Y, -Z) for coordinates (X, Y, Z) of the dots generated for the north-pole domain Ns. The method used to arrange the dots on the south-pole domain Ss is substantially the same as that used to arrange the dots on the north-pole domain Ns.

Then the dots used for rendering the equatorial domain Es are generated. Assuming the height is Zh, 6N dots are arranged at equal intervals on the parallel lines of latitude in the equatorial domain Es located at height Zh. The height Zh is calculated as follows:

$$Zh = R((M-2h)/(N + M))$$

Where, $h = 0, 1, 2, ..., M$, M is an integer.

In this case, each position generating a dot is shifted by 1/2 the dot interval whenever "h" increases by "1" so that a dot on a parallel line of latitude is located between the dots on the adjacent parallel lines of latitude. Therefore, assuming the X and Y coordinates of the dots (Xn, Yn) are on the parallel lines of latitude with a height of Zh, Xn and Yn are obtained from the following expressions.

$$Xn = sqrt (R^2 - Zh^2) \cos ((n\pi/3N) + (h\pi/6N))$$

$$Yn = sqrt (R^2 - Zh^2) \sin ((n\pi/3N) + (h\pi/6N))$$

Where, $n = 0, 1, 2, ..., 6N - 1$

Further, it is possible to arrange a plurality of dots on a circumference as described below. Assuming the X and Y coordinates of dots are Xt and Yt, then in order to arrange P dots on the parallel lines of latitude of the sphere at a height of Zj at equal intervals, the following expressions are used.

$$c = \cos (2\pi/P), s = \sin (2\pi/P)$$

$$(X0, Y0) = (sqrt (R^2 - Zi^2), 0)$$

$$(Xt+1, Yt+1) = (cXt - sYt, sXt + cYt)$$

Where, $t = 0, 1, 2, ..., P - 1$

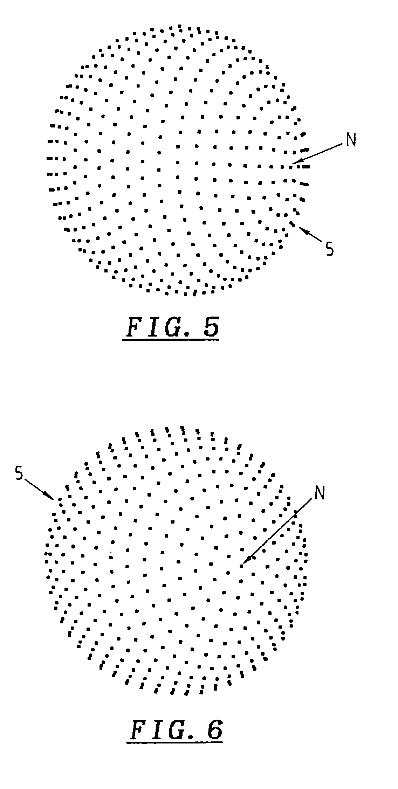

Figures 5 and 6 show rotation of the sphere obtained through the method of the preferred embodiment. The direction of the sphere after rotation can easily be ascertained because dots are uniformly distributed on the spherical surface.

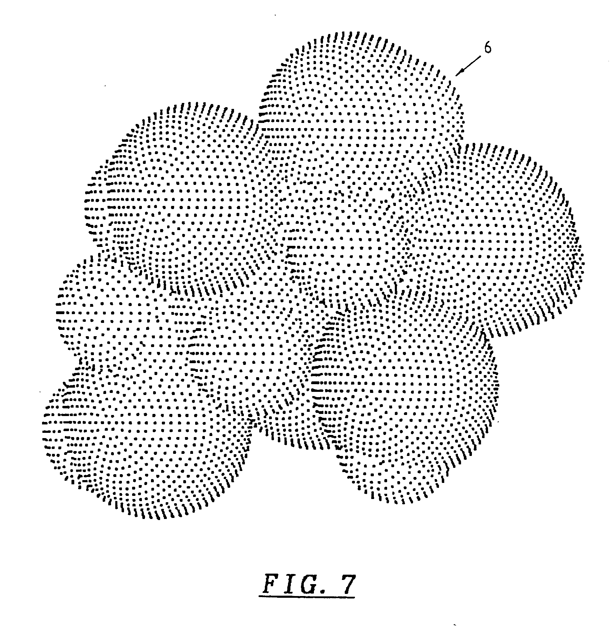

Figure 7 shows a molecular model 6 rendered by combining a plurality of spheres rendered by the method on the preferred embodiment.

For the sphere described in the embodiment, it is best to set the edges of the equatorial domain Es at a distance of 1/2R from the equatorial surface E of the sphere (where R is the radius of the sphere). With this setting, the expressions used for dot arrangement when dividing the sphere in the above-mentioned embodiment into the polar and equatorial domains are obtained by assuming $N = M$ in the above expressions. Although the height of the parallel lines of latitude where dots are arranged is selected as Zj and Zh, the height can also be selected so that it will be an equal parallel line of latitude. Although the above embodiment describes spherical surfaces, it is also possible to apply the present invention to combinations between an oval spheroid, hemisphere, or hemispheroid and an other object.

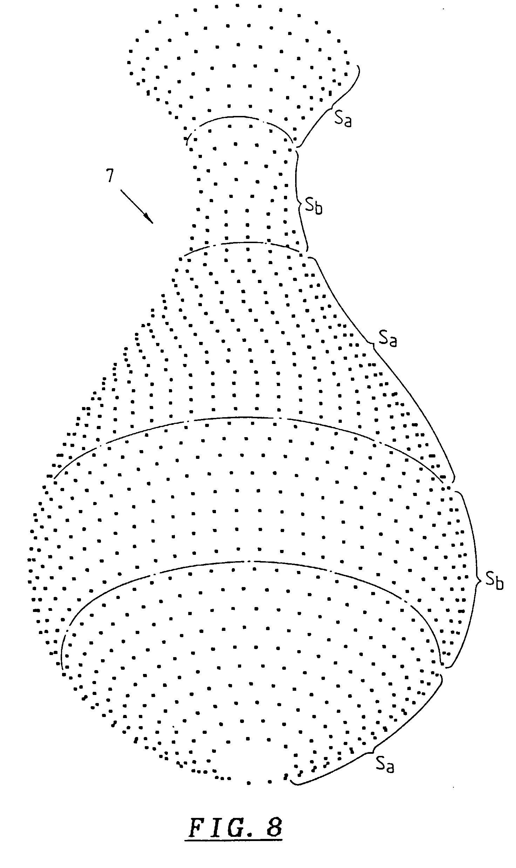

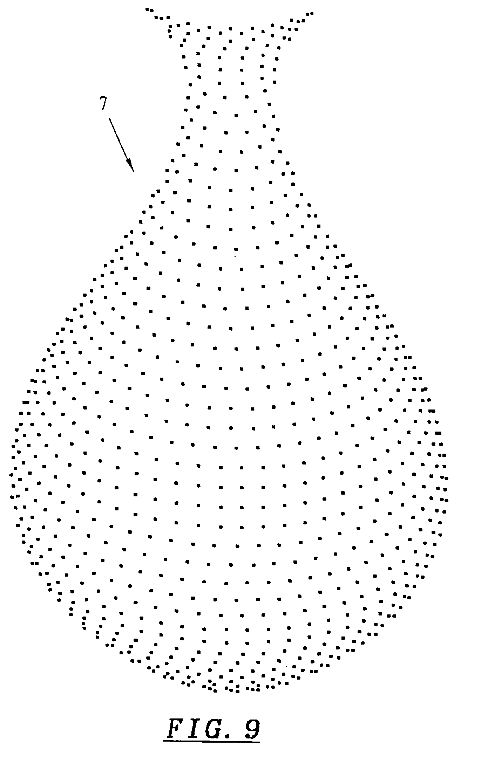

The following is the description of another embodiment of the present invention for three-dimensionally rendering a vase 7 by a plurality of dots according to Figures 8 and 9. As shown in Figures 8 and 9, the surfaces forming the vase 7 are divided into a domain Sa with a relatively large change in the radius of gyration from the rotation axis and the domain Sb with a relative small change in the radius of gyration from the rotation axis. True dots whose number increases (e.g. in an arithmetic progression) in accordance with the increase of the radius of gyration are arranged on concentric circumferences at equal intervals in the domain Sa with a relatively large change, and a certain number of dots are arranged on concentric circumferences at an equal interval in the domain Sb with a relatively small change so that a dot on a concentric circumference is located between the dots on the adjacent concentric circumference. As shown in Figures 8 and 9, the direction of the vase 7 can easily be ascertained in each drawing after the vase 7 is rotated because dots are uniformly distributed on the surfaces forming the vase 7.

By distributing dots approximately uniformly on the surfaces of a three-dimensional object stripes are not produced on the surfaces even if the three-dimensional model is rotated continuously (in real time), unlike the conventional equal-area mapping technique. Further, the dots are not concentrated on the poles and dispersed around the equator as in the latitude-longitude intersection method. Also, because the calculation of dot distribution is simple, the positions of dots after a rotation of coordinates can easily be calculated and hence the amount of computer processing time is less than that needed for the point symmetry group method. With the preferred embodiment of the present invention an operator can easily ascertain the direction of a rotated three-dimensional model, and dots are not unnaturally arranged on the surfaces.

## Claims

1. A method of rendering a three-dimensional object by a plurality of dots on a two-dimensional display, the three-dimensional object being a body of rotation, and the method being characterised by the steps of:

   dividing the surfaces forming the body into a first domain and a second domain, the first domain including those surfaces for which the rate of change of the radius of gyration measured from a notional axis of rotation of the body is larger than the rate of change of the radius of gyration of surfaces in the second domain;

   arranging dots whose number increases in accordance with the increase of said radius of gyration on concentric circumferences in said first domain at an equal interval; and

   arranging a certain number of dots on concentric circumferences at an equal interval in said second domain so that a dot on a concentric circumference is located between the dots on the adjacent concentric circumferences.

2. A method as claimed in Claim 1, wherein the number of dots on concentric circumferences in the first domain increases in an arithmetic progression in accordance with the increase in the radius of gyration.

3. A method as claimed in Claim 1 or Claim 2, wherein the dividing step includes selecting non-contiguous portions of the surfaces for at least one of said first domain and said second domain.

4. A method as claimed in any preceding Claim, wherein said body of rotation is a sphere.

5. A method as claimed in any preceding Claim wherein the object is constituted by combination of a plurality of said bodies of rotation.

6. An apparatus for rendering a three-dimensional object by a plurality of dots on a two-dimensional display, the three-dimensional object being a body of rotation and the apparatus being characterised by:

   a diving means for dividing the surfaces forming the body into a first domain and a second domain, the first domain including those surfaces for which the rate of change of the radius of gyration measured from a notional axis of rotation of the body is larger than the rate of change of the radius of gyration of surfaces in said second domain; and

   an arranging means for arranging dots whose number increases in accordance with the increase in said radius of gyration on concentric circumferences in said first domain at an equal interval, and for arranging a certain number of dots on concentric circumferences at an equal interval in said second domain so that a dot on a concentric circumference is located between the dots on the adjacent concentric circumferences.

7. An apparatus as claimed in Claim 6, wherein the arranging means increases the number of dots on concentric circumferences in the first domain in an arithmetic progression in accordance with the increase in the radius of gyration.

8. An apparatus as claimed in Claim 6 or Claim 7, wherein the diving means is arranged to select non-contiguous portions of the surfaces for at least one of said first domain and said second domain.

## Patentansprüche

1. Ein Verfahren zur Darstellung eines dreidimensionalen Objekts durch zahlreiche Punkte auf einer zweidimensionalen Anzeige, wobei das dreidimensionale Objekt ein Drehkörper ist, und das Verfahren durch folgende Schritte gekennzeichnet ist:

   das Teilen der Oberflächen, die den Körper in einen ersten und einen zweiten Bereich teilen, wobei der erste Bereich die Flächen umfaßt, deren Änderungsrate der Kreisdrehung, gemessen von einer gedachten Drehachse des Körpers, größer als die Änderungsrate der Kreisdrehung der Oberflächen im zweiten Bereich ist;

die Anordung der Punkte, deren Zahl entsprechend der Erhöhung der Kreisdrehung zunimmt, und zwar im gleichen Abstand auf konzentrischen Kreislinien im ersten Bereich; und

die Anordnung einer bestimmten Reihe von Punkten im gleichen Abstand auf konzentrischen Kreislinien im zweiten Bereich, so daß sich ein Punkt auf einer konzentrischen Kreislinie zwischen den Punkten auf den benachbarten konzentrischen Kreislinien befindet.

2. Ein Verfahren nach Anspruch 1, bei dem die Zahl der Punkte auf konzentrischen Kreislinien im ersten Bereich in einer arithmetischen Reihe entsprechend der Erhöhung der Kreisdrehung zunimmt.

3. Ein Verfahren nach Anspruch 1 oder Anspruch 2, bei dem der Teilungsschritt die Auswahl nicht-benachbarter Teile der Oberflächen für mindestens einen der ersten und zweiten Bereiche beinhaltet.

4. Ein Verfahren nach einem der oben genannten Ansprüche, bei dem der Drehkörper eine Kugel ist.

5. Ein Verfahren nach einem der oben genannten Ansprüche, bei dem das Objekt aus einer Kombination von zahlreichen Drehkörpern besteht.

6. Eine Vorrichtung zur Darstellung eines dreidimensionalen Objekts durch zahlreiche Punkte auf einer zweidimensionalen Anzeige, wobei das dreidimensionale Objekt ein Drehkörper ist, und die Vorrichtung durch folgendes gekennzeichnet ist:

ein Teilungsmittel zum Teilen der Oberflächen, die den Körper in einen ersten und einen zweiten Bereich teilen, wobei der erste Bereich die Flächen umfaßt, deren Änderungsrate der Kreisdrehung, gemessen von einer gedachten Drehachse des Körpers, größer als die Änderungsrate der Kreisdrehung der Oberflächen im zweiten Bereich ist; und

ein Anordnungsmittel zum Anordnen der Punkte, deren Zahl entsprechend der Erhöhung der Kreisdrehung zunimmt, und zwar im gleichen Abstand auf konzentrischen Kreislinien im ersten Bereich, und zum Anordnen einer bestimmten Reihe von Punkten im gleichen Abstand auf konzentrischen Kreislinien im zweiten Bereich, so daß sich ein Punkt auf einer konzentrischen Kreislinie zwischen den Punkten auf den benachbarten konzentrischen Kreislinien befindet.

7. Eine Vorrichtung nach Anspruch 6, bei der das Anordnungsmittel die Zahl der Punkte auf konzentrischen Kreislinien im ersten Bereich in einer arithmetischen Reihe entsprechend der Erhöhung der Kreisdrehung erhöht.

8. Eine Vorrichtung nach Anspruch 6 oder Anspruch 7, bei der das Teilungsmittel nicht-benachbarte Teile der Oberflächen für mindestens einen der ersten und zweiten Bereiche auswählt.

**Revendications**

1. Procédé pour représenter un objet en trois dimensions par une pluralité de points sur un visuel à deux dimensions, l'objet à trois dimensions étant un corps en rotation, et le procédé étant caractérisé par les étapes suivantes:

division des surfaces formant le corps en un premier domaine et un second domaine, le premier domaine incluant les surfaces pour lesquelles le taux de variation du rayon de giration mesuré à partir d'un axe de rotation notionnel du corps est supérieur au taux de variation du rayon de giration des surfaces du second domaine;
disposition de points dont le nombre croît en fonction de l'accroissement dudit rayon de giration sur des circonférences concentriques dans ledit premier domaine à des intervalles égaux; et
disposition d'un certain nombre de points sur des circonférences concentriques à des intervalles égaux dans ledit second domaine de telle sorte qu'un point sur une circonférence concentrique soit situé entre les points sur les circonférences concentriques adjacentes.

2. Procédé selon la revendication 1, dans lequel le nombre de points sur des circonférences concentriques dans le premier domaine croît selon une progression arithmétique en fonction de l'accroissement du rayon de giration.

3. Procédé selon la revendication 1 ou la revendication 2, dans lequel l'étape de division comporte la sélection de parties non contiguës des surfaces pour au moins l'un dudit premier domaine et dudit second domaine.

4. Procédé selon l'une quelconque des revendications précédentes, dans lequel ledit corps en rotation est une sphère.

5. Procédé selon l'une quelconque des revendications précédentes, dans lequel l'objet est constitué par la combinaison d'une pluralité desdits corps en rotation.

6. Appareil pour représenter un objet en trois dimensions par une pluralité de points sur un visuel à deux dimensions, l'objet à trois dimensions étant un corps en rotation et l'appareil étant caractérisé par:

   un moyen de division pour diviser les surfaces formant le corps en un premier domaine et un second domaine, le premier domaine incluant les surfaces pour lesquelles le taux de variation du rayon de giration mesuré à partir d'un axe de rotation notionnel du corps est supérieur au taux de variation du rayon de giration des surfaces du second domaine; et
   un moyen d'agencement pour disposer des points dont le nombre croît en fonction de l'accroissement dudit rayon de giration sur des circonférences concentriques dans ledit premier domaine à des intervalles égaux; et pour disposer un certain nombre de points sur des circonférences concentriques à des intervalles égaux dans ledit second domaine de telle sorte qu'un point sur une circonférence concentrique soit situé entre les points sur les circonférences concentriques adjacentes.

7. Appareil selon la revendication 6, dans lequel le moyen d'agencement accroît le nombre de points sur des circonférences concentriques dans le premier domaine selon une progression arithmétique en fonction de l'accroissement du rayon de giration.

8. Appareil selon la revendication 6 ou la revendication 7, dans lequel le moyen de division est disposé pour sélectionner des parties non contiguës des surfaces pour au moins l'un dudit premier domaine et dudit second domaine.

**STORAGE UNIT** — 2

**INPUT UNIT** — 4

**TWO-DIMENSIONAL SCREEN DISPLAY UNIT** — 3

**CENTRAL PROCESSING UNIT** — 1

## *FIG. 1*

*FIG. 2*

FIG. 3

FIG. 4

**_FIG. 5_**

**_FIG. 6_**

*FIG. 7*

*FIG. 8*

7

*FIG. 9*